# EUROPEAN PATENT APPLICATION

(11) **EP 3 537 350 A1**
(43) Date of publication of application: **11.09.2019**
(21) Application number: 18160055.2
(22) Date of filing: 05.03.2018
(51) Int. Cl.: G06Q 10/06, G06F 17/30

(54) **METHOD AND SYSTEM FOR CUSTOMIZED TRANSFER OF DATA**

(71) Applicant: Hexagon Technology Center GmbH, 9435 Heerbrugg (CH)
(72) Inventor: BERG, David, S-656 31 Karlstad (SE); VIAZMINAS, Aleksandras, S-691 51 Karlskoga (SE)
(74) Representative: Kaminski Harmann

(57) **Abstract**

The invention pertains to a method for flexible transfer of data to a client computer, the data being organized in resources that are stored on a remote server computer in a hierarchical database, the resources having hierarchical relationships with each other, wherein the method comprises generating a query comprising a plurality of query parameters; generating a call for data based on the query, in the course of which call a data connection is established between the client computer and the server computer, the plurality of query parameters is sent from the client computer to the server computer, data is provided from the server computer to the client computer according to the plurality of query parameters, the provided data comprising a plurality of resources and their hierarchical relationships, and the data connection between the client computer and the server computer is terminated; and outputting the provided data to a user of the client computer, characterized in that a status of the database is subject to continuous change, wherein at least a structure and/or content of the database is variable, wherein the query is generated manually by an input of the user of the client computer, and customized for a single call fitting a present status of the database.

## Description

The present invention pertains to a method and computer system for transferring data to a client computer. Said data is organized in resources that are stored on a remote server computer in a hierarchical database, a status of which database being subject to continuous change. According to the invention the method allows a user to customize a query for a single call that fits a present status of the database.

An API orchestration layer (API = application programming interface) is an abstraction layer that takes generically-modeled data elements and/or features and prepares them in a more specific way for a targeted developer or application. To address this opportunity, orchestration layers are employed into API infrastructure. While there are many ways in which to implement this architectural construct, the basic concept remains the same across all of them. The presented solution also works for a static implemented API.

There are many cases where a user of the API also needs to load data related to or referenced from the resource being requested. Rather than requiring the consumer to hit the API repeatedly for this information, there would be a significant efficiency gain from allowing related data to be returned and loaded alongside the original resource on demand.

With query-based APIs the power is put in the hands of the requesting developer, although that power is limited. The goal here is to create a more flexible way in which the requester can make requests and tailor payloads without putting additional ongoing burden on the developer of the API, as could be the case with device-specific wrappers.

This is achieved by breaking down the resource-based APIs and allowing them to be queried against e. g. a database through flexible parameters and payloads that can contract, expand and possibly morph based on what is needed. The benefit here is that once the query language is set, the API provider does not need to keep writing wrappers as new implementations are needed for different devices.

The detriment, however, is that the query-based API is still a set of rules to which the developer needs to adhere, although these rules are much more flexible than the resource-based API model. However, the orchestration implementation does not restrict a user of the API from using it as a classic resource based API. The orchestration is an extension to the resource API model.

Such method and system is useful for all API where data with relations is queried.

For instance, they can be useful in applications regarding a building information model (BIM). In certain BIM software packages, where the construction of a house is controllable, e. g. as disclosed in the European patent applications EP15153842.8, EP16161760.0 and EP16161770.9, the construction can be split into a number of work packages. These work packages comprise single working steps which might be grouped in step groups. Returning these resources with a single query would be beneficial.

It is therefore an object of the present invention to provide an improved method for transferring data from a server computer to a client computer.

It is another object to provide an improved computer system and a computer programme product for execution of such a method.

Particularly, it is an object to provide such a method and system providing a higher efficiency when transferring data.

It is a further object to provide such a method and system for allowing a customized generation of a query to return a chain of resources in a single call.

It is another object to provide such a method and system for use in the context of a construction project, the data belonging to a building information model.

At least one of these objects is achieved by the method according to claim 1, the computer system according to claim 8, and/or the dependent claims of the present invention.

A first aspect of the invention relates to a method for flexible transfer of data to a client computer, the data being organized in resources that are stored on a remote server computer in a hierarchical database, the resources having hierarchical relationships with each other. Said method comprises generating a query comprising a plurality of query parameters, generating a call for data based on the query, in the course of which call a data connection is established between the client computer and the server computer, the plurality of query parameters is sent from the client computer to the server computer, data is provided from the server computer to the client computer according to the plurality of query parameters, the provided data comprising a plurality of resources and their hierarchical relationships, and the data connection between the client computer and the server computer is terminated, and outputting the provided data to a user of the client computer.

According to the invention, a status of the database is subject to continuous change, wherein at least a structure and/or content of the database is variable, wherein the query is generated manually by an input of the user of the client computer, and customized for a single call fitting a present status of the database.

According to one embodiment of the method, determining the query parameters comprises defining resources and/or selecting pre-defined resources for outputting, particularly groups and/or categories of resources.

According to another embodiment, the provided data comprises a hierarchical chain of resources. Alternatively or additionally, the provided data may also comprise a graph structure.

According to a further embodiment, the resources comprise at least one recursive resource having a recursive relation with itself, and the provided data comprises the at least one recursive resource and its hierarchical relationships, particularly child resources of the at least one recursive resource.

According to yet another embodiment, a graphical user interface allowing the user to generate the query is provided on the client computer.

According to another embodiment of the method, the resources are part of a building information model provided on the server computer, wherein the building information model is adapted to be used in the context of a construction of a structure, and wherein the resources comprise data about steps that are planned to be performed in the course of the construction of the structure, and work packages comprising a plurality of said steps or groups of said steps.

According to one embodiment of this method, determining the query parameters comprises selecting a subset of steps, groups of steps and/or work packages for outputting.

A second aspect of the invention relates to a computer system which comprises a server computer having a data storage device, wherein data is stored in the storage device in a hierarchical database, the data being organized in resources having hierarchical relationships with each other, and a client computer providing a query-based application programming interface (API) adapted to generate a query for retrieving resources from the server computer. The client computer is adapted to generate a call for data based on the query, in the course of which call the computer system is adapted to establish a data connection between the client computer and the server computer, the client computer is adapted to send a plurality of query parameters to the server computer, and the server computer is adapted to provide data to the client computer according to the plurality of query parameters, the provided data comprising a plurality of resources and their hierarchical relationships.

According to this aspect of the invention, a status of the database is subject to continuous change, wherein at least a structure and/or content of the database is variable, wherein the application programming interface is adapted to receive an input of the user of the client computer, and generate a query based on the input, the query being customized for a single call fitting a present status of the database.

According to one embodiment, the computer system is adapted as or part of a construction management system for use in the context of a construction of a structure, wherein the hierarchical database is part of a building information model that is stored in the storage device of the server computer, and the resources comprise data about steps that are planned to be performed in the course of the construction of the structure and work packages comprising a plurality of said steps or groups of said steps.

According to one embodiment of this computer system, the query is editable in such a way that steps and/or work packages are selectable by the user.

According to another embodiment, the computer system comprises a cluster of server computers working as a cloud system, wherein the computer system is adapted to establish a data connection between the client computer and the cloud system by means of an internet or intranet connection.

According to yet another embodiment of the computer system, the client computer is a handheld device, wherein the computer system is adapted to establish a data connection between the client computer and the server computer by means of a wireless connection. For example, the client computer can be a Smartphone or a tablet computer.

According to a further embodiment of the computer system, the query is editable in such a way that resources are selectable by the user, particularly wherein groups and/or categories of resources are selectable.

According to yet another embodiment, in the hierarchical database the resources are stored in a tree structure, wherein the tree structure comprises at least one recursive resource having a recursive relation, and child resources of the at least one recursive resource are retrievable with the single query.

Another aspect of the invention relates to a computer programme product comprising programme code which is stored on a machine-readable medium or being embodied by an electromagnetic wave comprising a programme code segment, and having computer-executable instructions for performing, in particular when run on a client computer of a computing system according to the second aspect, at least the following steps of the method according to the first aspect:
- generating a query comprising a plurality of query parameters;
- generating a call for data based on the query, and
- outputting provided data to a user of the client computer,
wherein a status of the database is subject to continuous change, wherein at least a structure and/or content of the database is variable, and the query is based on an input of a user of the client computer, and customized for a single call fitting a present status of the database.

The invention in the following will be described in detail by referring to exemplary embodiments that are accompanied by figures, in which:
- Fig. 1: shows an orchestrated query for requesting provision of resources from a hierarchical database;
- Fig. 2: shows the use of query parameters for requesting provision of the same resources;
- Fig. 3: shows the use of other query parameters for requesting provision of other resources from the same database;
- Fig. 4: shows an exemplary output as a result of such a query;
- Figs. 5a-c: show the use of query parameters for requesting provision of resources from a database having recursive relations;
- Fig. 6: shows the steps of an exemplary embodiment of a method according to the invention; and
- Fig. 7: illustrates the use of a filter in the course of the orchestration.

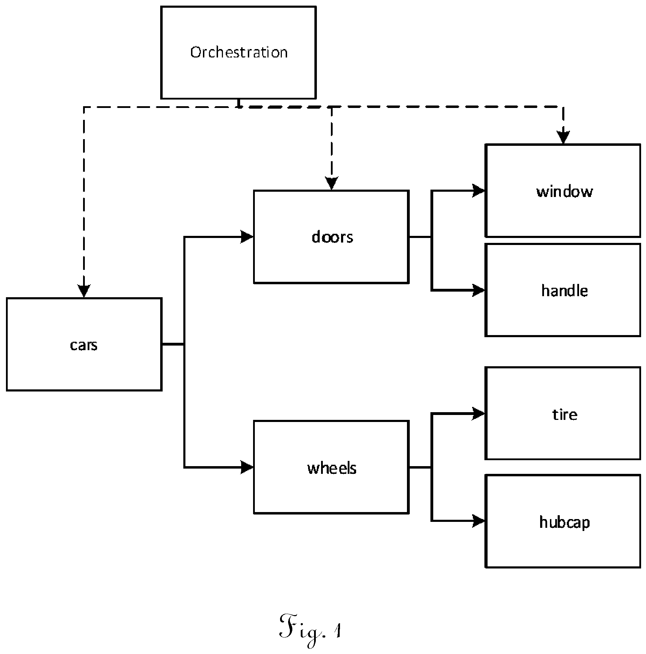

Figure 1 illustrates an orchestrated query for requesting provision of resources from a hierarchical database. The purpose of an orchestration is to return not only data from a single resource, but also data related to or referenced from the resource being requested.

In the shown example, the resources in the database comprise "cars" having the child resources "doors" and "wheels", the former having the child resources "window" and "handle", the latter having the child resources "tire" and "hubcap". The depicted orchestration returns the resource "cars" together with the sub-resources "doors" and "window". It does neither return "handle", nor "wheels", "tire" or "hubcap".

Using such an orchestration however requires the application programming interface (API) to predefine all orchestration paths needed. This solution is however not flexible and thus only useable if the structure of the database as well as the needs of the user are static.

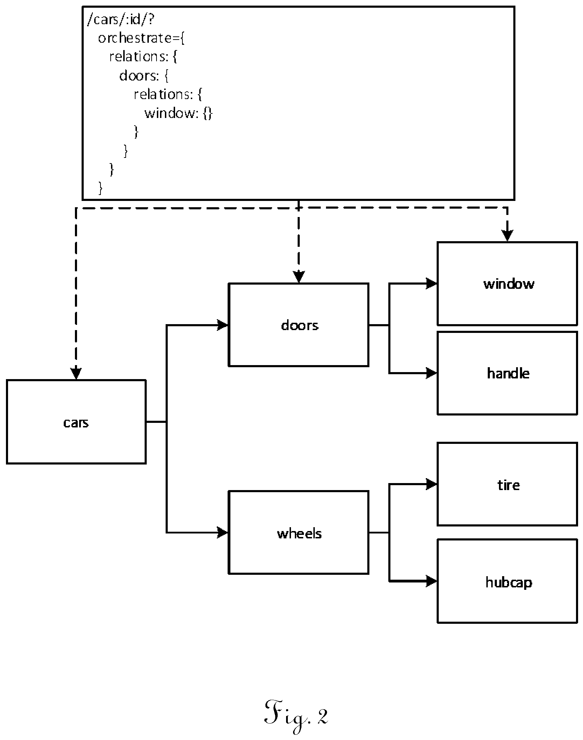

A solution to this problem is shown in Figure 2, where a query language is supported allowing the user to specify which resources to get in one call. Figure 2 shows the use of query parameters for the same resources as returned by the orchestration of Figure 1.

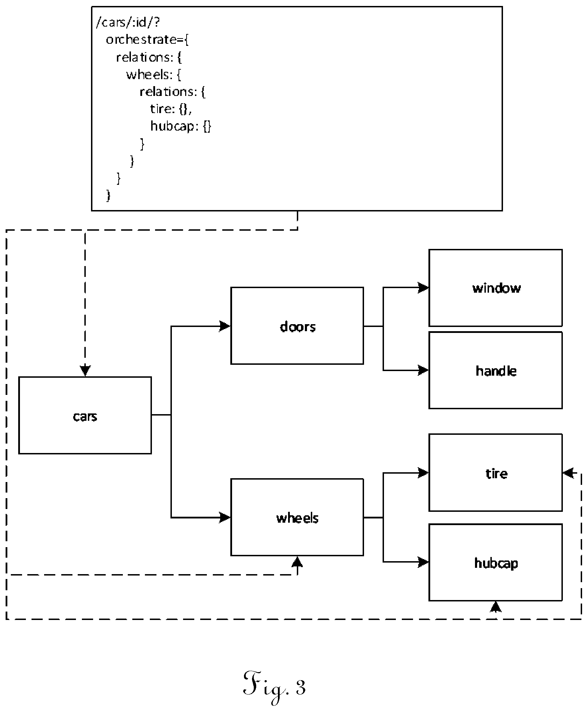

The query can be modified to add or remove resources according to the need of a user: Figure 3 shows a query returning all "cars" and "wheels" and "tire" and "hubcap".

To be able to implement this solution, the application programming interface (API) needs to keep track of all relations between objects. In other words, the resource "cars" needs to know that it has two sub resources named "doors" and "wheels".

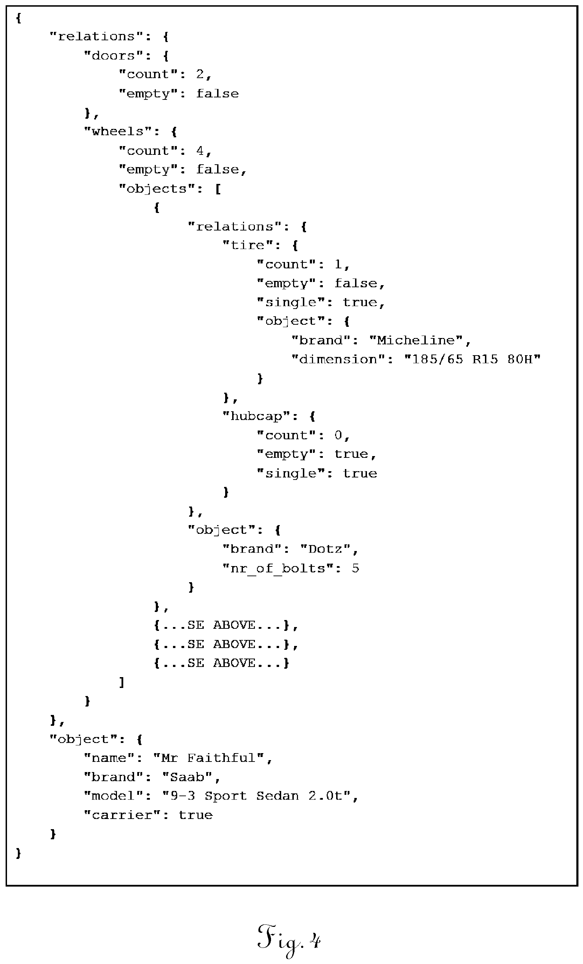

Figure 4 illustrates how a response from the orchestration in Figure 3 could look like.

To facilitate the editing of a query for the user, the system can provide a graphical user interface, wherein the resources to be returned can be selectable, e. g. by clicking with a mouse cursor on a button that is labelled correspondingly.

It is also possible to return more than one root object. As an example it could be possible to return both "cars" and some related sub-resources to "cars" together with another root resource on the same level as "cars". Further, it is possible to specify the depth of a tree or to provide filter support on the root level as well as on all levels of the orchestration. The returned data may also comprise a link to self, e. g. the URL where the specific object can be found.

The orchestration described above does not only provide a way to query the API, but it is also possible to save or update information in multiple resources with the orchestration structure. That structure looks the same as the response from the API, which e. g. makes it possible to save an entire tree of different resources with a single request.

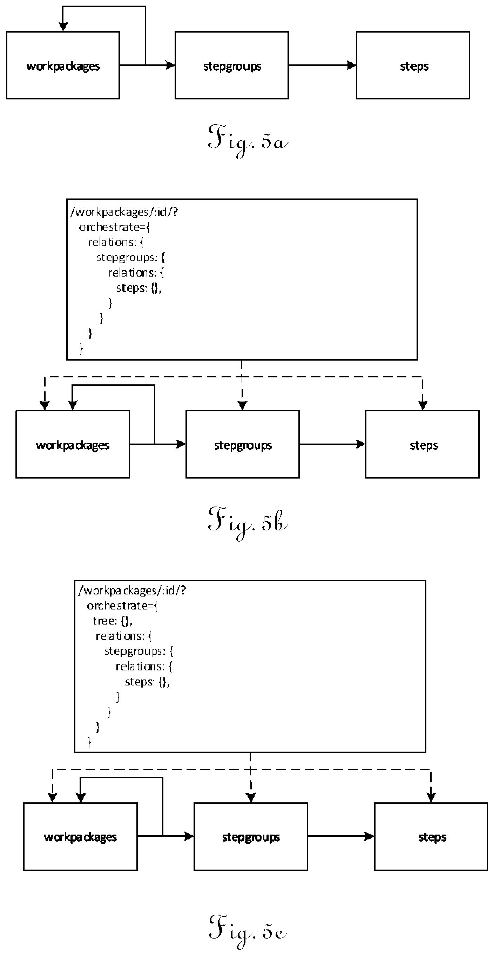

In Figures 5a-c the example of an API retrieving data from a building information model (BIM) is used for illustrating how the described solution also supports tree resources. This means the whole tree can be returned when calling a resource that is recursive.

Especially if the computer system is adapted as a construction management system for use in context of a construction of a structure, wherein the hierarchical database is part of a building information model that is stored in the storage device of the server computer, and the resources comprise data about steps that are planned to be performed in the course of the construction of the structure and work packages comprising a plurality of said steps or groups of said steps, an exemplary tree structure might look like the one depicted in Figure 5a: the root resource "workpackages" comprises the child resources "stepgroups" comprising the child resources "steps".

In the structure of Figure 5a, a recursive relation exists.

This is indicated by an arrow going from "workpackages" back to "workpackages". In this example, the recursive relation means that a "workpackage" may comprise children also belonging to the type "workpackage".

With a query as shown in Figure 5b, it would be only possible to receive the root "workpackages" and no child "workpackages" of the recursive relation. To support returning trees, syntax as shown in Figure 5c needs to be implemented. The parameter "tree:{}" specifies that the whole tree of "workpackages" should be returned instead of just the root level.

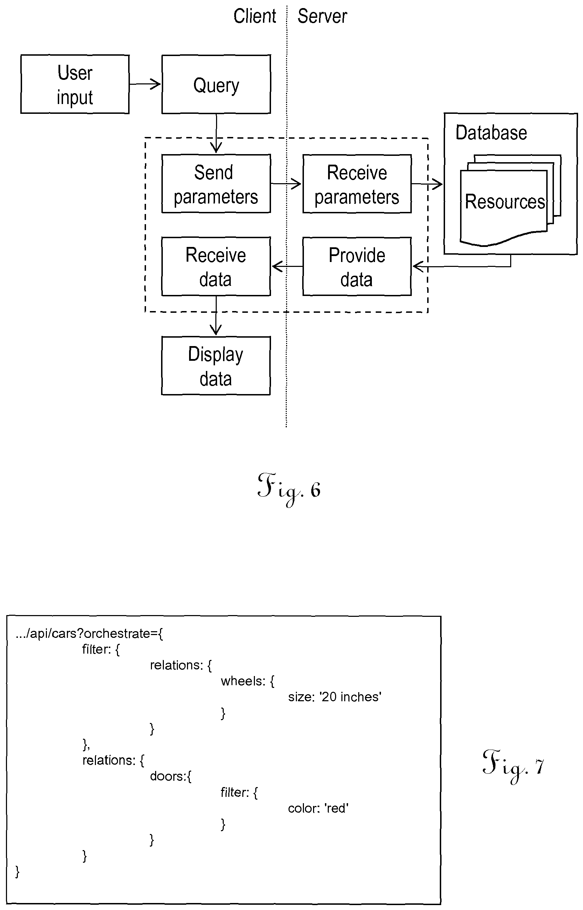

Figure 6 illustrates the steps of an exemplary method using the queries as shown above. The depicted method begins with a user input, wherein a user of a client computer generates a customized query for needed data. Said query comprises query parameters, which are sent from the client computer to a server computer, e. g. via an Internet or intranet connection. These parameters are received at the server computer which has access to a database with a multitude of stored resources. According to the query parameters, the server computer provides data from the database to the client computer. Having received said data, the client computer displays or otherwise provides the data to the user.

The client computer can be embodied by a handheld electronic device, such as a Smartphone or a tablet computer which is connected to the server by means of a wireless connection (e. g. a wireless local area network). This is especially useful if the computer system is embodied as a construction management system for use in context of a construction of a structure, or embodied as a part thereof, respectively. The server computer optionally need not be a single computer but can be embodied as a cluster of server computers working as a cloud system.

Figure 7 illustrates an example how orchestrations can be used with filters. The given example includes two filters. The first filter is defined for the "cars" resource, but the cars resource is filtered by the property values of any of its child resource "wheels". The second filter is defined on the level "doors" and will filter the doors related to the "cars". The response to the above query will deliver all cars that have any 20 inches wheels and also all red doors for those cars.

Although the invention is illustrated above, partly with reference to some preferred embodiments, it must be understood that numerous modifications and combinations of different features of the embodiments can be made. All of these modifications lie within the scope of the appended claims.

## Claims

1. Method for flexible transfer of data to a client computer, the data being organized in resources that are stored on a remote server computer in a hierarchical database, the resources having hierarchical relationships with each other, wherein the method comprises
- generating a query comprising a plurality of query parameters;
- generating a call for data based on the query, in the course of which call
- a data connection is established between the client computer and the server computer,
- the plurality of query parameters is sent from the client computer to the server computer,
- data is provided from the server computer to the client computer according to the plurality of query parameters, the provided data comprising a plurality of resources and their hierarchical relationships, and
- the data connection between the client computer and the server computer is terminated; and
- outputting the provided data to a user of the client computer,
**characterized in that**
a status of the database is subject to continuous change, wherein at least a structure and/or content of the database is variable, wherein the query is
- generated manually by an input of the user of the client computer, and
- customized for a single call fitting a present status of the database.

2. Method according to claim 1,
**characterized in that**
determining the query parameters comprises defining resources and/or selecting pre-defined resources for outputting, particularly groups and/or categories of resources.

3. Method according to claim 1 or claim 2,
**characterized in that**
the provided data comprises a hierarchical chain of resources.

4. Method according to any one of the preceding claims,
**characterized in that**
the provided data comprises a graph structure.

5. Method according to any one of the preceding claims,
**characterized in that**
- the resources comprise at least one recursive resource having a recursive relation with itself, and
- the provided data comprises the at least one recursive resource and its hierarchical relationships, particularly child resources of the at least one recursive resource.

6. Method according to any one of the preceding claims,
**characterized in that**
a graphical user interface allowing the user to generate the query is provided on the client computer.

7. Method according to any one of the preceding claims,
**characterized in that**
the resources are part of a building information model provided on the server computer, wherein the building information model is adapted to be used in the context of a construction of a structure, and wherein the resources comprise data about
- steps that are planned to be performed in the course of the construction of the structure, and
- work packages comprising a plurality of said steps or groups of said steps.
particularly wherein determining the query parameters comprises selecting a subset of steps, groups of steps and/or work packages for outputting.

8. Computer system, comprising
- a server computer having a data storage device, wherein data is stored in the storage device in a hierarchical database, the data being organized in resources having hierarchical relationships with each other, and
- a client computer providing a query-based application programming interface adapted to generate a query for retrieving resources from the server computer,
wherein the client computer is adapted to generate a call for data based on the query, in the course of which call
- the computer system is adapted to establish a data connection between the client computer and the server computer,
- the client computer is adapted to send a plurality of query parameters to the server computer, and
- the server computer is adapted to provide data to the client computer according to the plurality of query parameters, the provided data comprising a plurality of resources and their hierarchical relationships,
**characterized in that**
a status of the database is subject to continuous change, wherein at least a structure and/or content of the database is variable, wherein the application programming interface is adapted to
- receive an input of the user of the client computer, and
- generate a query based on the input, the query being customized for a single call fitting a present status of the database.

9. Computer system according to claim 8,
**characterized in that**
the computer system is adapted as or part of a construction management system for use in context of a construction of a structure, wherein
- the hierarchical database is part of a building information model that is stored in the storage device of the server computer, and
- the resources comprise data about steps that are planned to be performed in the course of the construction of the structure and work packages comprising a plurality of said steps or groups of said steps.

10. Computer system according to claim 9,
**characterized in that**
the query is editable in such a way that steps and/or work packages are selectable by the user.

11. Computer system according to any one of claims 8 to 10,
**characterized by**
a cluster of server computers working as a cloud system, wherein the computer system is adapted to establish a data connection between the client computer and the cloud system by means of an internet or intranet connection.

12. Computer system according to any one of claims 8 to 11,
**characterized in that**
the client computer is a handheld device, wherein the computer system is adapted to establish a data connection between the client computer and the server computer by means of a wireless connection, particularly wherein the client computer is embodied by a Smartphone or a tablet computer.

13. Computer system according to any one of claims 8 to 12,
**characterized in that**
the query is editable in such a way that resources are selectable by the user, particularly groups and/or categories of resources.

14. Computer system according to any one of claims 8 to 13,
**characterized in that**
in the hierarchical database the resources are stored in a tree structure, wherein
- the tree structure comprises at least one recursive resource having a recursive relation, and
- child resources of the at least one recursive resource are retrievable with the single query.

15. Computer programme product comprising programme code which is stored on a machine-readable medium or being embodied by an electromagnetic wave comprising a programme code segment, and having computer-executable instructions for performing, in particular when run on a client computer of a computing system according to any one of claims 8 to 14, at least the following steps of the method according to one of the claims 1 to 7:
- generating a query comprising a plurality of query parameters;
- generating a call for data based on the query, and
- outputting provided data to a user of the client computer,
wherein
- a status of the database is subject to continuous change, wherein at least a structure and/or content of the database is variable, and
- the query is based on an input of a user of the client computer, and customized for a single call fitting a present status of the database.
